(19) Europäisches Patentamt
European Patent Office
Office européen des brevets

(11) **EP 4 525 280 A1**

(12) **EUROPEAN PATENT APPLICATION**

(43) Date of publication:
**19.03.2025 Bulletin 2025/12**

(21) Application number: **23196709.2**

(22) Date of filing: **12.09.2023**

(51) International Patent Classification (IPC):
**H02M 1/00** $^{(2006.01)}$     **H02M 3/335** $^{(2006.01)}$

(52) Cooperative Patent Classification (CPC):
**H02M 1/0025; H02M 3/33571;** H02M 1/36;
H02M 3/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Tridonic GmbH & Co. KG
6851 Dornbirn (AT)**

(72) Inventors:
• **Schneider, Miguel Philipp
6850 Dornbirn (AT)**
• **Maldoner, Jakob
6850 Dornbirn (AT)**
• **Egle, Manuel
6850 Dornbirn (AT)**
• **Moosbrugger, Markus
6850 Dornbirn (AT)**

(74) Representative: **Rupp, Christian
Mitscherlich PartmbB
Patent- und Rechtsanwälte
Karlstraße 7
80333 München (DE)**

(54) **RESONANT HYBRID FLYBACK CONVERTER, AND CONTROL ARRANGEMENT FOR AND METHOD OF OPERATING THE SAME**

(57)     Disclosed are a control arrangement (1) for a resonant hybrid flyback converter (2) and a resonant hybrid flyback converter (2) for an LED load (3). The control arrangement (1) comprises a first control unit (11); and a second control unit (12). The second control unit (12) is configured to offset a second sense signal being indicative of a half-bridge magnetizing current ($I_{HB}$) of the converter (2) in accordance with a total offset ($V_{DACoutput}$) for the second sense signal output by the first control unit (11), wherein the total offset comprises an adjustable offset ($V_{offset_{comp}}$) and a constant offset ($V_{offset_{default}}$). The converter (2) comprises a high-side switch (21) and a low-side switch (22) in a half-bridge arrangement and having a common terminal (23); a first sensing unit, configured to sense a first sense signal being indicative of a load voltage ($V_{LED}$); a second sensing unit (24), configured to sense the second sense signal being indicative of the half-bridge magnetizing current ($I_{HB}$) emerging from the common terminal (23); a third sensing unit, configured to sense a third sense signal being indicative of a load current ($I_{LED}$); and the control arrangement (1). The first control unit (11) is further configured to adjust a duration ($t_{LSon_k}$) of a conduction period of the low-side switch (22) in accordance with the first sense signal; calculate an offset ($I_{HB_{comp}}$) of the half-bridge magnetizing current ($I_{HB}$) in accordance with the adjusted duration ($t_{LSon_k}$) and an actual duration ($t_{LSon_{k-1}}$) of the conduction period of the low-side switch (22); and calculate the adjustable offset ($V_{offset_{comp}}$) for the second

sense signal in accordance with the offset ($I_{HB_{comp}}$) of the half-bridge magnetizing current ($I_{HB}$); The second control unit (12) is further configured to calculate a threshold value ($I_{HB_{ref}}$) for the second sense signal in accordance with the third sense signal and a reference variable for the same; and control a duration ($t_{HSon}$) of a conduction period of the high-side switch (21) in accordance with the offset second sense signal and the threshold value ($I_{HB_{ref}}$) for the second sense signal. This avoids current spikes in the load current ($I_{LED}$).

FIG. 3

EP 4 525 280 A1

**Description**

**Technical Field**

The present disclosure relates generally to the field of lighting technology, more specifically to power conversion in lighting technology, and in particular to a resonant hybrid flyback converter, to a control arrangement for the same, and to a method of operating the same.

**Background Art**

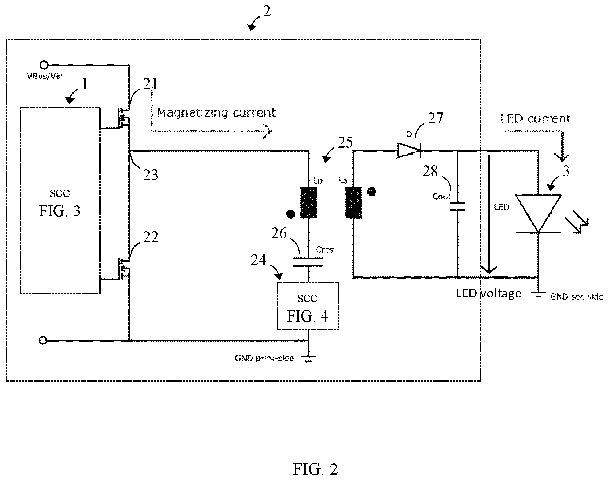

For regulation and competition reasons, power converters for lighting applications are continually optimized in terms of energy dissipation. To this end, the relatively new converter topology shown in FIG. 2 being known as resonant hybrid flyback (RHF) may reduce energy losses even at moderate switching frequencies.

Such converters combine of a primary-side circuit (i.e., the switching half-bridge and the resonant tank) of resonant converters and a secondary-side circuit (i.e., the transformer, rectifier and filter) of flyback converters.

The conduction period of the high-side switch of the switching half-bridge induces a rise of a primary-side current into the resonant tank circuit of substantially linear profile. The following conduction period of the low-side switch of the switching half-bridge causes a drop and subsequent rise of the primary-side current which looks like a negative sine wave having a period defined by the resonant frequency of the resonant tank circuit, and further causes a concurrent rise of a secondary-side current resembling a positive sine wave. An LED current of a multiple (according to the winding ratio of the transformer) of an average of the primary-side current emerges. This LED current is regulated via a duration of the conduction period of the high-side switch, whereas a duration of the conduction period of the low-side switch is set according to the LED voltage which may vary owing to dimming or during converter start-up.

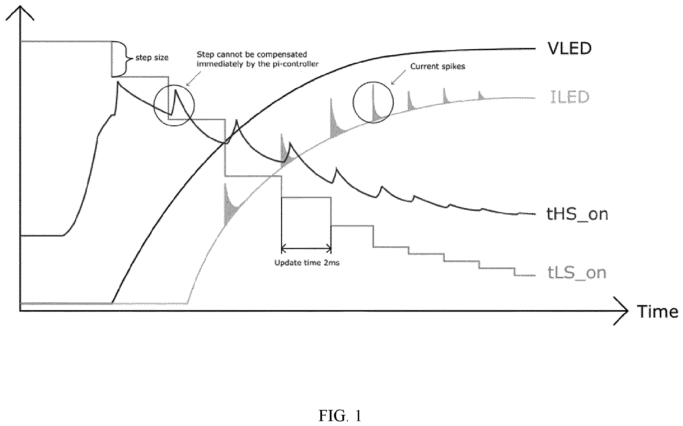

Big instantaneous changes of the LED voltage may translate into big instantaneous steps of the duration of the conduction period of the low-side switch due to a cyclic adjustment of the same. The regulator circuit may not be able to compensate such big steps immediately, such that the primary-side current strongly increases and the load current shows significant spikes (see FIG. 1).

**Summary**

It is an object to overcome the above-mentioned and other drawbacks.

The foregoing and other objects are achieved by the features of the independent claims. Further implementation forms are apparent from the dependent claims, the description and the figures.

According to a first aspect, a control arrangement is provided for a resonant hybrid flyback converter. The control arrangement comprises a first control unit; and a second control unit. The second control unit is configured to offset a second sense signal being indicative of a half-bridge magnetizing current of the converter in accordance with a total offset for the second sense signal output by the first control unit. wherein the total offset comprises an adjustable offset and a constant offset.

A control arrangement as used herein may refer to control units in the form of integrated circuits being arranged together for fulfillment of a control and/or regulation functionality.

An integrated circuit as used herein may refer to electronic circuitry being integrated on a semiconductor substrate. Examples include application-specific integrated circuits (ASICs) or microcontrollers.

A half-bridge arrangement or half-bridge as used herein may refer to a circuitry wherein two circuit elements of a same type, such as switching elements, are connected in series. From a common terminal of the serially connected circuit elements, an electrical quantity of interest such as a current or voltage may emerge.

A magnetizing current as used herein may refer to a current into an inductive element such as a primary winding of a transformer.

An offset as used herein may refer to a positive contribution to (or displacement of) an electrical quantity.

According to a second aspect, a resonant hybrid flyback converter is provided for an LED load. The converter comprises a high-side switch and a low-side switch in a half-bridge arrangement and having a common terminal; a first sensing unit, configured to sense a first sense signal being indicative of a load voltage; a second sensing unit, configured to sense a second sense signal being indicative of a half-bridge magnetizing current emerging from the common terminal; a third sensing unit, configured to sense a third sense signal being indicative of a load current; and a control arrangement according to the first aspect. The first control unit is further configured to adjust a duration of a conduction period of the low-side switch in accordance with the first sense signal; calculate an offset of the half-bridge magnetizing current in accordance with the adjusted duration and an actual duration of the conduction period of the low-side switch; and calculate the adjustable offset for the second sense signal in accordance with the offset of the half-bridge magnetizing current; The second control unit is further configured to calculate a threshold value for the second sense signal in

EP 4 525 280 A1

accordance with the third sense signal and a reference variable for the same; and control a duration of a conduction period of the high-side switch in accordance with the offset second sense signal and the threshold value for the second sense signal.

A high-side (or low-side) switch as used herein may refer to a switching element such as a transistor being connected to a higher (or lower) electric potential of an applied input voltage.

A conduction period as used herein may refer to a time period during which a switching element such as a transistor provides a low-resistance path for an electrical current.

A reference variable as used herein may refer to a desired setpoint for a measured process variable.

The first control unit may comprise a microcontroller; and the second control unit may comprise an application-specific integrated circuit, ASIC.

The high-side switch and the low-side switch may respectively comprise a metal oxide semiconductor field-effect transistor, MOSFET.

The third sensing unit may comprise a shunt resistor.

A shunt resistor as used herein may refer to a low-ohmic resistor being interposed in a current path and meant to pass the current around (i.e., not to pass through) an associated measurement circuitry.

The first control unit may be configured to adjust the duration of the conduction period of the low-side switch in accordance with the first sense signal by applying a hysteresis to the adjusted duration relative to an actual duration of the conduction period of the low-side switch.

The first control unit may be configured to calculate the offset of the half-bridge magnetizing current in accordance with the adjusted duration and the actual duration of the conduction period of the low-side switch by subtracting the adjusted duration from the actual duration, and further incorporating a turns ratio of a transformer of the converter, a current load voltage indicated by the first sense signal, and a main inductance of the transformer.

The second sensing unit may comprise a shunt resistor; a first resistor interposed between the first control unit and the second control unit; and a second resistor interposed between the shunt resistor and the second control unit; and the first control unit may be configured to calculate the adjustable offset for the second sense signal by incorporating the half-bridge magnetizing current, an ohmic impedance of the second sensing unit and the ohmic impedances of the first resistor and the second resistor.

The first control unit may be configured to output the total offset for the second sense signal by adding the adjustable offset and the constant offset, further incorporating a resolution of a digital-analog converter, DAC, of the first control unit and a reference voltage of the DAC, and outputting a resulting ratio.

A digital-analog converter or DAC as used herein may refer to an output port of a control unit such as a microcontroller being configured to adjust an electric potential of the output port (relative to a ground potential) in accordance with a given reference voltage and a given resolution (number of voltage steps).

The second control unit may be configured to offset the second sense signal in accordance with the total offset for the second sense signal by adding the second sense signal and its total offset.

The second control unit may comprise a proportional-integral, PI, controller; and the second control unit may be configured to calculate a threshold value for the second sense signal in accordance with the third sense signal and a reference variable for the same, by subtracting the reference variable and the third sense signal; calculating and adding control terms of the second control unit in accordance with a resulting difference; and outputting a resulting sum.

A PI controller as used herein may refer to a closed-loop control mechanism for substantially continuous regulation of a process variable based on proportional (P) and integral (I) control terms depending on a difference between a reference variable and the measured process variable.

The second control unit may comprise a comparator unit connected to a control terminal of the high-side switch; and the second control unit may be configured to control a duration of a conduction period of the high-side switch in accordance with the offset second sense signal and the threshold value for the second sense signal, by outputting, by the comparator unit, a logic high signal if the offset second sense signal is less than the threshold value or a logic low value if the offset second sense signal is greater than or equal to the threshold value.

A comparator unit or comparator as used herein may refer to an analog circuit element being configured to compare two voltages or currents and to output a logic signal (having 'high' or 'low' states or levels) indicating which one is larger.

According to a third aspect, a luminaire is provided, comprising an LED load; and a resonant hybrid flyback converter according to the second aspect for the LED load.

According to a fourth aspect, a method is provided of operating a resonant hybrid flyback converter for an LED load. The converter comprises a high-side switch and a low-side switch in a half-bridge arrangement and having a common terminal. The method comprises: sensing a first sense signal being indicative of a load voltage; sensing a second sense signal being indicative of a half-bridge magnetizing current emerging from the common terminal; sensing a third sense signal being indicative of a load current; adjusting a duration of a conduction period of the low-side switch in accordance with the first sense signal; calculating a offset of the half-bridge magnetizing current in accordance with the adjusted duration and an actual duration of the conduction period of the low-side switch; calculating an adjustable offset for the second sense signal in accordance with the offset of the half-bridge magnetizing current; outputting a total offset for the second sense signal, the total offset comprising the adjustable offset and a constant offset; inputting the total offset for the second sense signal; offsetting the second sense signal in accordance with the total offset for the second sense signal; calculating a threshold value for the second sense signal in accordance with the third sense signal and a reference variable for the same; and controlling a duration of a conduction period of the high-side switch in accordance with the offset second sense signal and the threshold value for the second sense signal.

**Advantageous Effects**

As initially mentioned, the resonant hybrid flyback converter topology suffers from current spikes occurring when the duration of the conduction time of the low-side switch ("LS on-time") is adjusted in steps. By limiting the step size, the current spikes can be kept lower, but not completely reduced.

The proposed resonant hybrid flyback converter topology including the control arrangement manipulates the sense signal of the primary-side (i.e., magnetizing) current by adding an offset such that the steps of the LS on-time are immediately compensated for.

Thereby, current spikes are removed from the LED current, a smaller output filter design is possible, a more robust LS ON time correction is possible, and the system plant becomes more linear.

**Brief Description of Drawings**

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

FIG. 1   illustrates a behavior of a resonant hybrid flyback converter in accordance with prior art;

FIG. 2   illustrates a resonant hybrid flyback converter in accordance with the present disclosure;

FIG. 3   illustrates a control arrangement in accordance with the present disclosure for the resonant hybrid flyback converter of FIG. 2;

FIG. 4   illustrates details of a second sensing unit in accordance with the present disclosure for sensing a half-bridge magnetizing current $I_{HB}$ of the resonant hybrid flyback converter of FIG. 2;

FIG. 5   illustrates a behavior of the resonant hybrid flyback converter in accordance with the present disclosure; and

FIG. 6   illustrates a method in accordance with the present disclosure of operating the resonant hybrid flyback converter in accordance with the present disclosure.

**Detailed Descriptions of Drawings**

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

FIG. 1 illustrates a behavior of a resonant hybrid flyback converter in accordance with prior art.

The load voltage $V_{LED}$ rises asymptotically from zero to its nominal value during a start-up phase of the converter, for example. Note the rising curve indicated as "VLED".

To run the converter at a certain operating point (e.g., $V_{LED}$ = 54 V) a specific duration $t_{LSon}$ ("LS on-time") of a conduction period of a low-side switch of the converter is required. But this specific LS on-time is not constant over the output window, it differs from load voltage to load voltage. So, the LS on-time is dependent from the load voltage $V_{LED}$ and is just constant in steady state.

The reason for this can be found in a magnetizing current slope of a transformer of the converter. When the load voltage $V_{LED}$ decreases, also the voltage across the secondary side of the transformer gets smaller. This results in a flatter slope of the magnetizing current. A flatter slope of the magnetizing current means, that the LS on-time must be increased such that a negative peak of the magnetizing current (being essential for zero-voltage switching / ZVS) is reached.

To always reach the same negative magnetizing current peak over the entire output window, a peak-to-peak magnetizing current must be kept constant, independent on the operating point. This can be done by keeping the transformers voltage second balance, or in other words, the product of the transformers secondary side voltage (load voltage $V_{LED}$) and the LS on-time $t_{LSon}$ constant over the output window.

$$I_{pk_{neg}} = I_{pk_{pos}} - I_{pk-pk} = I_{pk_{pos}} - t_{LSon} * \frac{V_{LED}}{L}$$

So when the load voltage $V_{LED}$ changes, then the LS on-time $t_{LSon}$ must be adjusted such that the product remains same. Accordingly, the LS on-time $t_{LSon}$ is adjusted in accordance with the load voltage $V_{LED}$. Note the steps in the associated curve indicated as "tLS_on". Calculation of the numerator's constant value (voltage second balance value) is always done for a maximum load / LED power operating point. Across the output window, the LS on-time follows a 1/x function.

To avoid flicker during steady state a hysteresis may be implemented. The hysteresis is defined by how much the calculated LS on-time $t_{LSon}$ must change before it is updated.

For example, 2ms is a very low update / cycle time when considering e.g., fast start-ups, where the change of the load voltage $V_{LED}$ is very fast and dynamic. During 2ms the load voltage $V_{LED}$ can change a lot and therefore, the calculated change of the LS on-time $t_{LSon}$ can be large as well.

The converter's closed-loop controller may not be able to compensate for the fast LS on-time steps immediately. Note the slopes in the associated curve indicated as "tHS_on". As a result an amplitude of a magnetizing current into the transformer strongly increases, so that big spikes in the load current $I_{LED}$ result from the big instantaneous changes of the LS on-time $t_{LSon}$ (note the rising curve including spikes and indicated as "ILED").

To keep the current spikes as small as possible, the change of the LS on-time $t_{LSon}$ may be limited (step-size limitation). Current spikes can cause visible flicker, especially at low dimming levels. They can also be problematic regarding the maximum current limitations specified (e.g., +40% of $I_{LEDmax}$). Increasing the output filter for lower spikes is no option since this is associated with costs and space. The problem with limiting the step-size is, that the LS on-time $t_{LSon}$ will lag behind the actual situation causing a change in the negative magnetizing current peak. When the LS on-time adjustment is lagging when the load voltage $V_{LED}$ is decreasing, the negative magnetizing current peak increases leading to the risk of losing ZVS. On the other hand, when the adjustment is lagging behind during increasing LED voltage, the negative magnetizing current decreases, causing a high peak-to-peak current (risk of saturation in the transformer) leading to a high ripple on the load current $I_{LED}$.

FIG. 2 illustrates a resonant hybrid flyback converter 2 in accordance with the present disclosure.

Also shown is an LED load 3 connected to the converter 2. The converter 2 and the LED load 3 may form part of a luminaire, for example.

The converter 2 comprises a high-side switch 21 and a low-side switch 22 in a half-bridge arrangement and having a common terminal 23.

The high-side switch 21 and the low-side switch 22 may respectively comprise a metal oxide semiconductor field-effect transistor (MOSFET).

A direct-current (DC) bus voltage $V_{Bus}/V_{in}$ is applied across the half-bridge arrangement, so that depending on the substantially opposing switching states of the high-side switch 21 and a low-side switch 22 either the bus voltage $V_{Bus}/V_{in}$ or a primary-side ground potential applies at the common terminal 23.

The converter 2 further comprises a first sensing unit (not shown), configured to sense a first sense signal being indicative of a load voltage $V_{LED}$.

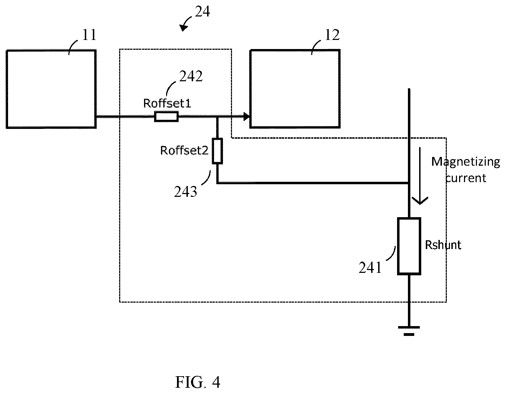

The converter 2 further comprises a second sensing unit 24 (shown in more detail in FIG. 4), configured to sense a second sense signal being indicative of a half-bridge magnetizing current $I_{HB}$ emerging from the common terminal 23 in response to the changing electric potential applying at the common terminal 23.

The converter 2 further comprises an isolating transformer 25, $L_p$, $L_s$ including primary and secondary windings $L_p$, $L_s$ having a winding ratio $N$ and an air gap for energy storage between energy input via the primary winding and energy output via the secondary winding.

The converter 2 further comprises a resonant capacity 26, $C_{res}$ which forms a resonant circuit in connection with a magnetizing inductance of the primary-side winding $L_p$ due to the air gap of the transformer 25.

The converter 2 further comprises a third sensing unit 24 (indicated as "black box" and explained in more detail in connection with FIG. 4), configured to sense a third sense signal being indicative of a load current $I_{LED}$.

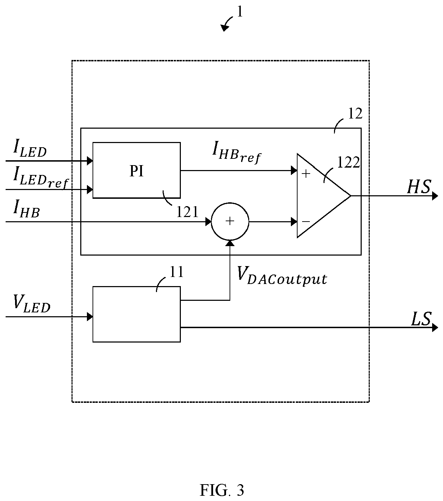

The converter 2 further comprises a control arrangement 1 (indicated as "black box" and explained in more detail in connection with FIG. 3) for the converter 2.

The converter 2 further comprises a rectifying diode 27 and a smoothing / output capacity 28.

FIG. 3 illustrates a control arrangement 1 in accordance with the present disclosure for the resonant hybrid flyback converter of FIG. 2.

The control arrangement 1 comprises a first control unit 11 and a second control unit 12.

In particular, the first control unit 11 may comprise a microcontroller, and the second control unit 12 may comprise an application-specific integrated circuit (ASIC).

The second control unit 12 may comprise a proportional-integral (PI) controller 121.

The second control unit 12 is configured to calculate a threshold value $I_{HBref}$ for the second sense signal (being indicative of the half-bridge magnetizing current $I_{HB}$) in accordance with the third sense signal (being indicative of the load current $I_{LED}$) and a reference variable for the same.

This may comprise subtracting the reference variable and the third sense signal; calculating and adding control terms of the second control unit 12 in accordance with a resulting difference $e(t)$; and outputting a resulting sum $I_{HBref}$:

$$e(t) = \left( I_{LED_{ref}} - I_{LED} \right)$$

$$I_{HB_{ref}} = K_P \left( e(t) + \frac{1}{T_I} \int_0^t e(\tau) \cdot d\tau \right)$$

The first control unit 11 is configured to adjust a duration $t_{LSon}$ of a conduction period of the low-side switch 22 in accordance with the first sense signal (being indicative of the load voltage $V_{LED}$).

This may further include applying a hysteresis to the adjusted duration $t_{LSonk}$ relative to an actual duration $t_{LSonk-1}$ of the conduction period of the low-side switch 22 (note that the index $k$ - 1 stands for an actual/most recent sensing instant/cycle, and that the index $k$ stands for a next/subsequent sensing instant/cycle).

As the second control unit 12 itself may be too slow to immediately respond to the LS on-time step $t_{LSonk-1} \rightarrow t_{LSonk}$ by an appropriate adaptation of the comparator reference $I_{HBref}$, an offset $V_{DACoutput}$ for the second sense signal (being indicative of the half-bridge magnetizing current $I_{HB}$) is adapted instead.

The change $I_{HBcomp}$ in magnetizing current amplitude which needs to be compensated (= offset) corresponds to the actual magnetizing current amplitude minus the magnetizing current amplitude which would result after performing the LS on-time step.

The first control unit 11 is further configured to calculate the offset $I_{HBcomp}$ of the half-bridge magnetizing current $I_{HB}$ in accordance with the adjusted duration $t_{LSonk}$ and an actual/most recent duration $t_{LSonk-1}$ of the conduction period of the low-side switch 22.

This may include subtracting the adjusted duration $t_{LSonk}$ from the actual duration $t_{LSonk-1}$, and further incorporating a turns ratio $N$ (e.g., 3.75) of a transformer 25 of the converter 2, a current load voltage $V_{LED}$ indicated by the first sense signal, and a main inductance $L$ (e.g., 450μH) of the transformer 25.

The first control unit 11 is further configured to calculate an adjustable offset $V_{offsetcomp}$ for the second sense signal in accordance with the calculated offset $I_{HBcomp}$ of the half-bridge magnetizing current $I_{HB}$ and the circumstances explained in connection with FIG. 4 below.

The first control unit 11 is further configured to output a total offset $V_{DACoutput}$ for the second sense signal (being indicative of the half-bridge magnetizing current $I_{HB}$), wherein the total offset comprises the adjustable offset $V_{offsetcomp}$ and a constant offset $V_{offsetdefault}$.

This may include adding the adjustable offset $V_{offsetcomp}$ and the constant offset $V_{offsetdefault}$, further incorporating a resolution $DAC_{resolution}$ (e.g., $2^{12} = 4096$) of a DAC of the first control unit 11 and a reference voltage $DAC_{reference}$ (e.g.,

3V) of the DAC, and outputting the resulting ratio $V_{DACoutput}$.

The constant offset $V_{offsetdefault}$, if any, lifts the curve of the half-bridge magnetizing current $I_{HB}$ to a positive range, such that the negative peak of the second sense signal does not reach 0V (prevention of false triggering of the low-side switch 22).

The adjustable offset $V_{offsetcomp}$, if any, compensates for the LS on-time step.

The second control unit 12 is further configured to input the total offset $V_{DACoutput}$ for the second sense signal and offset the second sense signal in accordance with the total offset $V_{DACoutput}$ for the second sense signal.

The latter may include adding the second sense signal and its total offset $V_{DACoutput}$.

The second control unit 12 is further configured to control a duration $t_{HSon}$ of a conduction period of the high-side switch 21 in accordance with the offset second sense signal $I_{HB} + V_{DACoutput}$ and the threshold value $I_{HBref}$ for the second sense signal.

This may include that the second control unit 12 comprises a comparator unit 122 connected to a control terminal of the high-side switch 21 and configured to output a logic high signal if the offset second sense signal $I_{HB} + V_{DACoutput}$ is less than the threshold value $I_{HBref}$ or a logic low value if the offset second sense signal $I_{HB} + V_{DACoutput}$ is greater than or equal to the threshold value $I_{HBref}$.

FIG. 4 illustrates details of a second sensing unit 24 in accordance with the present disclosure for sensing a half-bridge magnetizing current $I_{HB}$ of the resonant hybrid flyback converter of FIG. 2.

The third sensing unit 24 may comprise a shunt resistor 241, $R_{shunt}$ (e.g., 5. 1Ohm), thereby enabling the third sensing unit 24 to sense the second sense signal being indicative of the half-bridge magnetizing current $I_{HB}$ emerging from the common terminal 23 (see FIG. 2) in response to the changing electric potential applying at the common terminal 23.

The second sensing unit 24 may further comprise a first resistor 242, $R_{offset1}$ (e.g., 4.3kOhm) interposed between the first control unit 11 (i.e., microcontroller) and the second control unit 12 (i.e., ASIC).

The second sensing unit 24 may further comprise a second resistor 243, $R_{offset2}$ (e.g., 1kOhm) interposed between the shunt resistor 241 and the second control unit 12.

The first control unit 11 may be configured to calculate the adjustable offset $V_{offsetcomp}$ for the second sense signal by incorporating the half-bridge magnetizing current $I_{HBcomp}$, an ohmic impedance of the second sensing unit 24, and the ohmic impedances of the first resistor 242, $R_{offset1}$ and the second resistor 243, $R_{offset2}$.

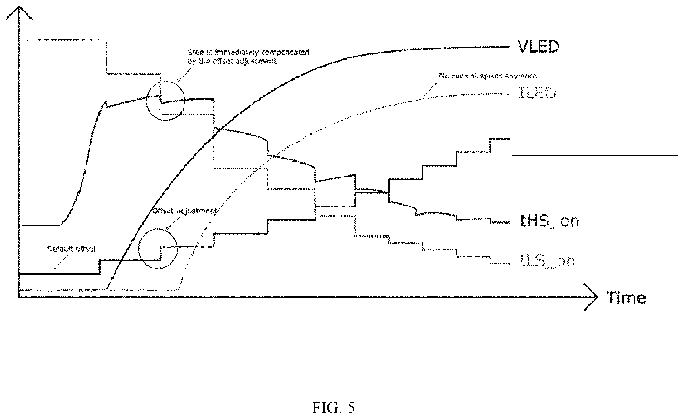

FIG. 5 illustrates a behavior of the resonant hybrid flyback converter 2 in accordance with the present disclosure.

Again, when the load voltage $V_{LED}$ changes, then the LS on-time $t_{LSon}$ must be adjusted such that the product of the transformers secondary side voltage (load voltage $V_{LED}$) and the LS on-time $t_{LSon}$ remains the same. Accordingly, the LS on-time $t_{LSon} = \dfrac{Const}{V_{LED}}$ is adjusted in accordance with the load voltage $V_{LED}$. Note the steps in the associated curve indicated as "tLS_on".

Still, the second control unit 12 is too slow to immediately respond to the LS on-time step $t_{LSonk-1} \to t_{LSonk}$ by an appropriate adaptation of the comparator reference $I_{HBref}$. Instead, the total offset $V_{DACoutput}$ for the second sense signal (being indicative of the half-bridge magnetizing current $I_{HB}$) is adapted as set out above.

The LS on-time steps $t_{LSonk-1} \to t_{LSonk}$ are compensated for immediately by offsetting the second sense signal by the adjustable offset $V_{offsetcomp}$ (i.e., by the adjustment of the total offset $V_{DACoutput}$ for the second sense signal).

As a result, the load current $I_{LED}$ lacks the current spikes observed in FIG. 1.

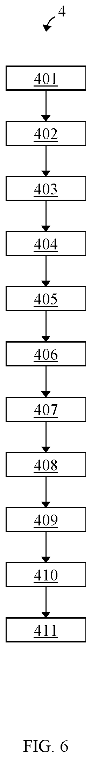

FIG. 6 illustrates a method 4 in accordance with the present disclosure of operating the resonant hybrid flyback converter 2 in accordance with the present disclosure.

As mentioned previously in connection with FIG. 2, the converter 2 comprises a high-side switch 21 and a low-side switch 22 in a half-bridge arrangement and having a common terminal 23.

The method 4 comprises a step of sensing 401 a first sense signal being indicative of a load voltage $V_{LED}$.

The method 4 further comprises a step of sensing 402 a second sense signal being indicative of a half-bridge magnetizing current $I_{HB}$ emerging from the common terminal 23.

The method 4 further comprises a step of sensing 403 a third sense signal being indicative of a load current $I_{LED}$; adjusting 404 a duration $t_{LSonk}$ of a conduction period of the low-side switch 22 in accordance with the first sense signal.

The method 4 further comprises a step of calculating 405 a offset $I_{HBcomp}$ of the half-bridge magnetizing current $I_{HB}$ in accordance with the adjusted duration $t_{LSonk}$ and an actual duration $t_{Lsonk-1}$ of the conduction period of the low-side switch 22.

The method 4 further comprises a step of calculating 406 an adjustable offset $V_{offsetcomp}$ for the second sense signal in accordance with the offset $I_{HBcomp}$ of the half-bridge magnetizing current $I_{HB}$.

The method 4 further comprises a step of outputting 407 a total offset $V_{DACoutput}$ for the second sense signal, the total offset comprising the adjustable offset $V_{offsetcomp}$ and a constant offset $V_{offsetdefault}$.

The method 4 further comprises a step of inputting 408 the total offset $V_{DACoutput}$ for the second sense signal.

The method 4 further comprises a step of offsetting 409 the second sense signal in accordance with the total offset $V_{DACoutput}$ for the second sense signal.

The method 4 further comprises a step of calculating 410 a threshold value $I_{HBref}$ for the second sense signal in accordance with the third sense signal and a reference variable for the same.

The method 4 further comprises a step of controlling 411 a duration $t_{HSon}$ of a conduction period of the high-side switch 21 in accordance with the offset second sense signal and the threshold value $I_{HBref}$ for the second sense signal.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A control arrangement (1) for a resonant hybrid flyback converter (2), comprising

   a first control unit (11); and
   a second control unit (12);
   the second control unit (12) configured to offset a second sense signal being indicative of a half-bridge magnetizing current ($I_{HB}$) of the converter (2) in accordance with a total offset ($V_{DACoutput}$) for the second sense signal output by the first control unit (11), the total offset comprising an adjustable offset ($V_{offsetcomp}$) and a constant offset ($V_{offsetdefault}$).

2. A resonant hybrid flyback converter (2) for an LED load (3), comprising

   a high-side switch (21) and a low-side switch (22) in a half-bridge arrangement and having a common terminal (23);
   a first sensing unit, configured to sense a first sense signal being indicative of a load voltage ($V_{LED}$);
   a second sensing unit (24), configured to sense a second sense signal being indicative of a half-bridge magnetizing current ($I_{HB}$) emerging from the common terminal (23);
   a third sensing unit, configured to sense a third sense signal being indicative of a load current ($I_{LED}$); and
   a control arrangement (1) according to claim 1;

   the first control unit (11) further configured to

   - adjust a duration ($t_{LSonk}$) of a conduction period of the low-side switch (22) in accordance with the first sense signal;
   - calculate an offset ($I_{HBcomp}$) of the half-bridge magnetizing current ($I_{HB}$) in accordance with the adjusted duration ($t_{LSonk}$) and an actual duration ($t_{LSonk-1}$) of the conduction period of the low-side switch (22);
   - calculate the adjustable offset ($V_{offsetcomp}$) for the second sense signal in accordance with the offset ($I_{HBcomp}$) of the half-bridge magnetizing current ($I_{HB}$);

   the second control unit (12) further configured to

   - calculate a threshold value ($I_{HBref}$) for the second sense signal in accordance with the third sense signal and a reference variable for the same; and
   - control a duration ($t_{HSon}$) of a conduction period of the high-side switch (21) in accordance with the offset second sense signal and the threshold value ($I_{HBref}$) for the second sense signal.

3. The arrangement (1) of claim 1 or the converter (2) of claim 2,

   the first control unit (11) comprising a microcontroller; and
   the second control unit (12) comprising an application-specific integrated circuit, ASIC.

4. The converter (2) of claim 2 or claim 3,
the high-side switch (21) and the low-side switch (22) respectively comprising a metal oxide semiconductor field-effect transistor, MOSFET.

5. The converter (2) of any one of the claims 2-4,
the third sensing unit comprising a shunt resistor.

6. The converter (2) of any one of the claims 2-5,
the first control unit (11) configured to adjust the duration ($t_{LSonk}$) of the conduction period of the low-side switch (22) in accordance with the first sense signal by applying a hysteresis to the adjusted duration ($t_{LSonk}$) relative to an actual duration ($t_{LSonk}$) of the conduction period of the low-side switch (22).

7. The converter (2) of any one of the claims 2-6,
the first control unit (11) configured to calculate the offset ($I_{HBcomp}$) of the half-bridge magnetizing current ($I_{HB}$) in accordance with the adjusted duration ($t_{LSonk}$) and the actual duration ($t_{LSonk-1}$) of the conduction period of the low-side switch (22) by

    - subtracting the adjusted duration ($t_{LSonk}$) from the actual duration ($t_{LSonk-1}$), and
    - further incorporating a turns ratio ($N$) of a transformer (25) of the converter (2), a current load voltage ($V_{LEDk}$) indicated by the first sense signal, and a main inductance ($L$) of the transformer (25).

8. The converter (2) of any one of the claims 2-7,

    the second sensing unit (24) comprising a shunt resistor (241);
    a first resistor (242, $R_{offset1}$) interposed between the first control unit (11) and the second control unit (12); and
    a second resistor (243, $R_{offset2}$) interposed between the shunt resistor (241) and the second control unit (12);
    the first control unit (11) configured to calculate the adjustable offset ($V_{offsetcomp}$) for the second sense signal by

        - incorporating the half-bridge magnetizing current ($I_{HBcomp}$), an ohmic impedance of the second sensing unit (24), and the ohmic impedances of the first resistor (242, $R_{offset1}$) and the second resistor (243, $R_{offset2}$).

9. The converter (2) of any one of the claims 2-8,
the first control unit (11) configured to output the total offset ($V_{DACoutput}$) for the second sense signal by

    - adding the adjustable offset ($V_{offsetcomp}$) and the constant offset ($V_{offsetdefault}$),
    - further incorporating a resolution ($DAC_{resolution}$) of a digital-analog converter (2), DAC, of the first control unit (11) and a reference voltage ($DAC_{reference}$) of the DAC, and
    - outputting a resulting ratio ($V_{DACoutput}$).

10. The converter (2) of any one of the claims 2-9,
the second control unit (12) configured to offset the second sense signal in accordance with the total offset ($V_{DACoutput}$) for the second sense signal by

    - adding the second sense signal and its total offset ($V_{DACoutput}$).

11. The converter (2) of any one of the claims 2-10,

    the second control unit (12) comprising a proportional-integral, PI, controller (121);
    the second control unit (12) configured to calculate a threshold value ($I_{HBref}$) for the second sense signal in accordance with the third sense signal and a reference variable for the same, by

        - subtracting the reference variable and the third sense signal;
        - calculating and adding control terms of the second control unit (12) in accordance with a resulting difference; and
        - outputting a resulting sum ($I_{HBref}$).

12. The converter (2) of any one of the claims 2-11,

the second control unit (12) comprising a comparator unit (122) connected to a control terminal of the high-side switch (21);

the second control unit (12) configured to control a duration ($t_{HSon}$) of a conduction period of the high-side switch (21) in accordance with the offset second sense signal and the threshold value ($I_{HBref}$) for the second sense signal, by

- outputting, by the comparator unit (122), a logic high signal if the offset second sense signal is less than the threshold value ($I_{HBref}$) or a logic low value if the offset second sense signal is greater than or equal to the threshold value ($I_{HBref}$).

13. A luminaire, comprising

an LED load (3); and
a resonant hybrid flyback converter (2) according to any one of the claims 2 - 12 for the LED load (3).

14. A method (4) of operating a resonant hybrid flyback converter (2) for an LED load (3),

the converter (2) comprising
a high-side switch (21) and a low-side switch (22) in a half-bridge arrangement and having a common terminal (23);
the method (4) comprising

- sensing (401) a first sense signal being indicative of a load voltage ($V_{LED}$);
- sensing (402) a second sense signal being indicative of a half-bridge magnetizing current ($I_{HB}$) emerging from the common terminal (23);
- sensing (403) a third sense signal being indicative of a load current ($I_{LED} = \overline{I_{HB}} \cdot N$);
- adjusting (404) a duration ($t_{LSonk}$) of a conduction period of the low-side switch (22) in accordance with the first sense signal;
- calculating (405) a offset ($I_{HBcomp}$) of the half-bridge magnetizing current ($I_{HB}$) in accordance with the adjusted duration ($t_{LSonk}$) and an actual duration ($t_{LSonk-1}$) of the conduction period of the low-side switch (22);
- calculating (406) an adjustable offset ($V_{offsetcomp}$) for the second sense signal in accordance with the offset ($I_{HBcomp}$) of the half-bridge magnetizing current ($I_{HB}$);
- outputting (407) a total offset ($V_{DACoutput}$) for the second sense signal, the total offset comprising the adjustable offset ($V_{offsetcomp}$) and a constant offset ($V_{offsetdefault}$);
- inputting (408) the total offset ($V_{DACoutput}$) for the second sense signal;
- offsetting (409) the second sense signal in accordance with the total offset ($V_{DACoutput}$) for the second sense signal;
- calculating (410) a threshold value ($I_{HBref}$) for the second sense signal in accordance with the third sense signal and a reference variable for the same; and
- controlling (411) a duration ($t_{HSon}$) of a conduction period of the high-side switch (21) in accordance with the offset second sense signal and the threshold value ($I_{HBref}$) for the second sense signal.

FIG. 1

FIG. 2

FIG. 3

FIG. 4

FIG. 5

4

```
┌─────────┐
│   401   │
└─────────┘
     │
     ▼
┌─────────┐
│   402   │
└─────────┘
     │
     ▼
┌─────────┐
│   403   │
└─────────┘
     │
     ▼
┌─────────┐
│   404   │
└─────────┘
     │
     ▼
┌─────────┐
│   405   │
└─────────┘
     │
     ▼
┌─────────┐
│   406   │
└─────────┘
     │
     ▼
┌─────────┐
│   407   │
└─────────┘
     │
     ▼
┌─────────┐
│   408   │
└─────────┘
     │
     ▼
┌─────────┐
│   409   │
└─────────┘
     │
     ▼
┌─────────┐
│   410   │
└─────────┘
     │
     ▼
┌─────────┐
│   411   │
└─────────┘
```

FIG. 6

**EUROPEAN SEARCH REPORT**

Europäisches
Patentamt
European
Patent Office
Office européen
des brevets

Application Number

EP 23 19 6709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 204 817 A (JERVATT MICROELECTRONIC STOCK LTD COMPANY) 18 March 2022 (2022-03-18) * the whole document * | 1-14 | INV. H02M1/00 H02M3/335 |
| A | CN 116 317 593 A (GUANGZHOU MORNSUN SCI & TECH) 23 June 2023 (2023-06-23) * the whole document * | 1-14 | |
| A | . .: "XDP Hybrid-flyback Controller XDPS2201", , 10 June 2021 (2021-06-10), pages 1-75, XP093107777, Retrieved from the Internet: URL:https://www.infineon.com/dgdl/Infineon-XDPS2201-DataSheet-v01_20-EN.pdf?fileId=5546d46277921c320177b3d4ea4a2055 [retrieved on 2023-12-01] * the whole document * | 1-14 | |

TECHNICAL FIELDS
SEARCHED (IPC)

H02M

The present search report has been drawn up for all claims

| Place of search | Date of completion of the search | Examiner |
|---|---|---|
| The Hague | 8 February 2024 | Gotzig, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6709

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | | Publication date | Patent family member(s) | Publication date |
|---|---|---|---|---|
| CN 114204817 | A | 18-03-2022 | NONE | |
| CN 116317593 | A | 23-06-2023 | NONE | |

EPO FORM P0459

For more details about this annex : see Official Journal of the European Patent Office, No. 12/82